# EUROPEAN PATENT SPECIFICATION

(11) **EP 1 343 976 B1**
(45) Date of publication and mention of the grant of the patent: **16.02.2005**
(21) Application number: 01272078.5
(22) Date of filing: 24.12.2001
(51) Int. Cl.: F16D 65/12, F16D 55/38, B60T 1/06

(54) **SPOT TYPE DISC BRAKE**
TEILBELAG-SCHEIBENBREMSE
FREIN A DISQUE DU TYPE A FAIBLE SURFACE DE CONTACT (SPOT)

(30) Priority: 22.12.2000 GB 0031468
(43) Date of publication of application: 17.09.2003
(73) Proprietor: Delphi Technologies Inc., Troy, MI 48007 (US)
(72) Inventor: THOMAS, Keith, Stuart, West Midlands CV5 8DD (GB)
(74) Representative: Lamb, Richard Andrew
(86) International application number: PCT/GB2001/005615
(87) International publication number: WO 2002/052164

(56) References cited:
- WO-A-00/09916
- GB-A- 2 340 563

## Description

This invention relates to a spot type disc brake according to the preamble of claim 1, known from document GB-A-234053. Typically there are provided twin brake discs, but a single such disc may be all that is needed for certain automotive models for the purpose of rear wheel braking.

In previously published patent applications such as WO 00/66907, GB 2,340,563, or WO 00/09916, there is disclosed a spot type automotive disc brake of the kind concerned in the present application in which various measures are taken to deal with the dynamic aspects of brake performance as encountered during actual usage including the use of resilient means for controlling various aspects of unwanted motion within the disc brake during use.

As part of our program of research and development for refining the operation of brakes of the kind disclosed in the above published WO application we have discovered that while the use of resilient means of various kinds for controlling brake disc and friction element movement is of merit, there are available significant further improvements in relation to friction element and brake disc control which are available by a quite different approach.

The basis of this new approach to controlling brake discs relates to an examination of the modes of available movement for a given brake disc and arising from its axially. slidable mounting with respect to the support or hub which carries it. Thus, we have established that significant improvements in elimination of judder and other kinds of imperfections in relation to the dynamic performance of disc brakes can be obtained by giving closer attention to the dimensional data relating to the relative sizes of the axially slidingly engaging structures of the brake discs and its mounting hub (on the one hand) and the effective "braking" diameter, meaning the mean diameter of the frictionally engaging surfaces of the friction elements and the brake discs, (on the other hand).

To put it another way, we have discovered that there are important stability advantages to be obtained by adopting an unconventional approach to the dimensional parameters employed in relation to the brake disc or discs and its/their mounting. Thus, in conventional (fixed disc) disc brakes the disc mounting arrangement is based upon providing a structurally and thermally stable mounting for the braking surfaces to ensure the effective generation and dispersal of converted kinetic-energy and the result of these considerations has led to the adoption of a very substantial brake disc structure and an integral associated mounting in which the working diameter of the friction-generating surfaces (the mean diameter) is bounded on both sides by ample friction-generating working width for the friction pads of the friction elements. Such an arrangement, providing as it does integral heat sink capability is well matched to the thermal requirements of the assembly and apart from variations in the geometry and angular disposition of the (sometimes somewhat frusto-conical) connecting surfaces between the actual disc and its inner bearing-journaled substantial central supporting disc, and is well established in use.

Thus, we have discovered that there are significant benefits to be gained by adopting a significantly different design approach from that which has become conventional for fixed discs. In the case of axially floating discs, we have discovered, the balance of emphasis in relation to dynamic and thermal factors can with benefit be shifted significantly from that which has been formerly adopted. Thus, by arranging matters so that the radially inner periphery of the friction-generating braking surface of the brake disc is relatively (as compared with conventional practice) somewhat displaced radially outwardly, thereby restricting the width available for friction pad engagement purposes, and is also relatively close to the axially-slidable drive connection to the brake disc mounting hub, there is a significant benefit available in terms of the net balance of thermal and dynamic/mechanical properties and performance.

This stability factor which we have discovered is significant enough to outweigh the inter-related thermal factors which might otherwise have predominated. In other words, our research and development work has shown that the inter-relationship of the radially inner limit of the available friction-generating surface of the brake disc, and the associated (not far inwardly-located) axially slidable drive structure for the disc, is unexpected with respect to previously established design norms in this field and indeed was unexpected to us in terms of initial design considerations when we began to explore this technical-field.

In numerical terms we have established that there is a band or range in terms of radius ratios (drive element line contact radius to disc centre of pressure radius) which extends from 66% to 80% and effectively encapsulates the zone in which these advantages are available.

The numerical range of 66 to 80% lies not a great many percentage points above that of at least one prior art arrangement but (we have discovered) this difference is sufficient to establish the basis for significantly improved dynamic performance in relation to brake stability and general driver-perceived excellence of operation. It will be appreciated that it takes only an extremely modest degree of driver-perceptible brake operation irregularity to significantly affect the acceptability of a brake's performance and the elimination of such a factor by means of a relatively small shift in design criteria is thus likewise not insignificant.

As to the technical basis for the advantages arising from the embodiments of the invention disclosed below, it is not straight forward to separate the inter-related factors. However, in relation to the dynamic considerations we mention that our research indicates that there is a relationship, the exact mathematical basis of which is difficult to determine, but which is basically direct-rather than inverse, between the extent of dynamically-induced vibration or judder arising during braking and the number of points of drive connection between the brake disc and its driving hub.

This result is somewhat contrary to the natural assumption that increasing the number of points of mechanical drive connection around the periphery of the assembly would tend to offset if anything any tendency to produce vibration or judder. However, the finding leads to a preferential reduction in the number of teeth or keys sliding in grooves or keyways in the connection between the brake disc and the hub and enables analysis to be made of the available modes of vibration, and the extent of these, on a significantly simplified basis for correlation with the radii parameters discussed above. These latter parameters can then be integrated with an analysis of the dynamics of operation taking account of gyroscopic effects which on the one hand have a stabilising effect in relation to the brake disc, and on the other hand tend to resist the making of disc rotation plane changes, particularly on a rapid basis, though the structure of the sliding surfaces which make contact between the disc and the drive hub, could be redesigned to enable the more effective transmission of steering knuckle attitude changes to the disc if so desired.

It will be understood that another aspect of the design of the areas of sliding contact between the disc or discs and its or their drive hub which is of significance in relation to the above concerns thermal transfer of kinetic energy changed into heat energy during braking. Such thermal energy needs to be dissipated relatively rapidly in use and the above-identified design preference for less rather than more keys and keyways and the like is not, in principle, a helpful design parameter in this regard, although (as in most real-life design situations) there is a compromise to be made in which the best of one set of factors is chosen to permit at least an acceptable corresponding set of factors in relation to another parameter.

In this particular case, we have found that there is a relatively well-defined band of design parameters in terms of the 66% to 80% radius ratio discussed above (drive element line contact radius to disc centre of pressure radius), which is of significance in combination with a reduced number of circumferentially-spaced zones of axially-slidable drive element engagement between the hub and the disc. Typically, the number of such drive connections will be a prime such as 11, 7 or 5 though 4 is also useful. We have established that in such an arrangement the thermal and gyroscopic and vibration mode factors achieve a significantly improved compromise and without producing any counterbalancing negative factor which is of sufficient importance to require discussion here.

Thus, an object of the present invention is to provide a method and apparatus applicable to the mounting of brake discs in disc brakes and offering improvements in relation to one or more of the factors discussed above, or indeed improvements generally.

According to the present invention there is provided a disc brake, as defined in the accompanying claims.

In embodiments of the invention described below with reference to the drawings, the adoption of the defined range of radius or diameter ratios produces the advantages discussed above in relation to the balance of dynamic (mechanical) and thermal factors, and an important aspect of the attainment of these advantages is connected with the (effectively) unusually large circumferential length around which the modest number (in the embodiments, either 4 or 5) of axially slidable inter engaging drive elements is provided. As a result of this the more effective dynamic control (provided by the larger circumferential length) in combination with the selective use of a vibration-mode-reducing number of interengaging drive elements has been found to provide unexpectedly advantageous results in terms of refinement of braking performance.

The selective use of 4, 5 or 7 such slidably interengaging drive elements (preferably 5 or 7) is itself a compromise between the conflicting requirements for (not unduly increasing the cost by) extra machining of the slidable structures and reduction of vibration modes. We have found that while the use of four such drive elements is acceptable (and achieves economy in terms of machining operation costs), the operational advantages of the use of 5 or 7 such drive elements are generally to be preferred and in practice it is expected that the optimum will be the use of 5.

There appears to be some degree of synergy as between the enlarged drive element pitch circle circumferential length and the adoption of prime numbers of slidable drive elements. It is hypothesized that the line contact between the drive elements and their complementary grooves (such line contact extending generally axially across the width of the drive element and groove) provided at 5 or 7 locations around the enlarged peripheral dimension of the drive hub leads to a vibrational mode damping effect in which the enlarged inter-drive contact line distances serve to make available vibrational modes which are relatively incompatible with the vibrational base frequencies generated during brake use.

In the embodiments described below the measurement basis for the defined range (66% to 80%) of radius or diameter ratios is as follows. For clarity and precision of definition and for repeatability of data derivation, the radius or diameter of the drive elements has been established on the basis of the radial distance between the disc axis and the line of contact between any given drive element (or tooth or key) and its corresponding channel (or groove or keyway). Where measurable differences exist in the said radial distance as between successive ones of the drive elements around the periphery of the drive hub, then the mean of such differences is used as the basis for calculation. Equally, if there were adopted a design in which more than one such radial distance were deliberately. adopted as a feature of the design, then again the mean value would be used as the basis for calculation. Such is the basis for the derivation of the 66% measurement representing the lower end of the range of values and relating to the diameter or radius of the drive elements.

Turning now to the corresponding radius or diameter of the friction face of the disc, such is faced based upon the centre of pressure in relation to the actuation force applied to the friction element assembly by the actuation means during use.

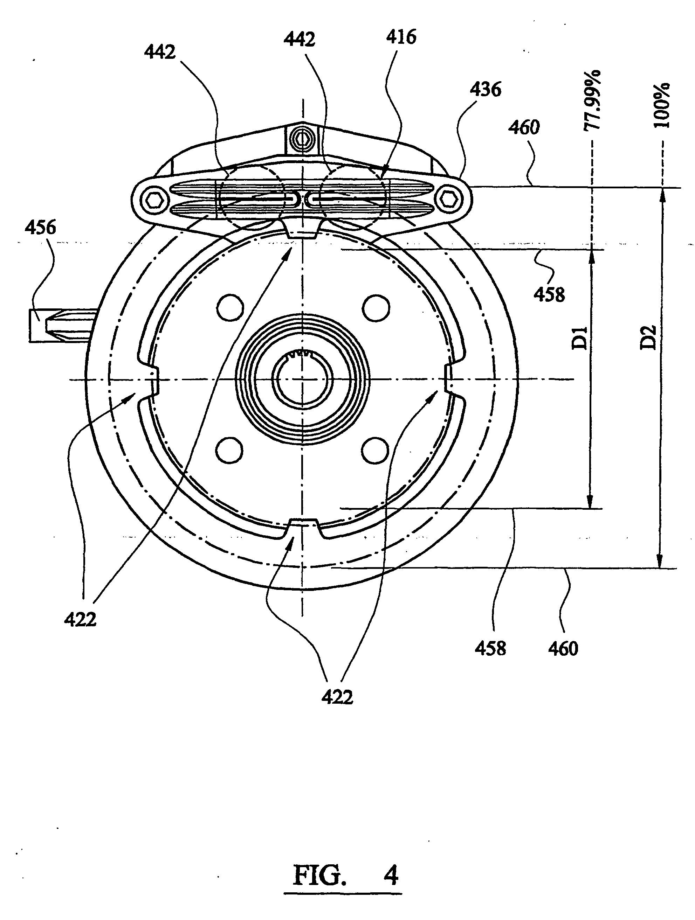

It is to be understood that the centre of pressure generated by the actuation means may lie on the piston axis where a hydraulic actuator piston is employed, but not necessarily so since the piston may act on the adjacent friction element through an intervening pressure distribution plate. Equally, as in the embodiment of Fig 4 below, there may be provided more than one piston and cylinder assembly, side by side in a tandem arrangement; with the centre of pressure located between the axis of the pistons. For measurement purposes, the centre of pressure relates to that location on the disc itself at which the brake-applying force can be considered as centralised during use. Such is clearly indicated in the accompanying drawings and is readily determinable for a give brake from the dimensional data relating to it. Such needs to take into account such design factors as the presence (in some brakes) of a friction element assembly in which the friction pads themselves are not symmetrical relative to the actuating piston or pistons.

Embodiments of the invention will now be described by way of example with reference to the accompanying drawings in which:
Fig 1 shows a side elevation view of a disc brake assembly as viewed in the axial direction (with respect to the disc), and including an integrated wheel mounting and steering arm and brake caliper assembly, provided for use in an automotive vehicle front wheel assembly;
Figs 2, 3 and 4 show, in views similar to that of Fig 1, three further embodiments of the invention, and illustrating modifications in terms of critical radial dimensions and the numbers of drive elements provided between the disc and its drive hub, the construction of the brake caliper, the number of actuation cylinders, and other features;
Figs 5, 6 and 7 illustrate in similar (simplified) views, the effect of these variables.

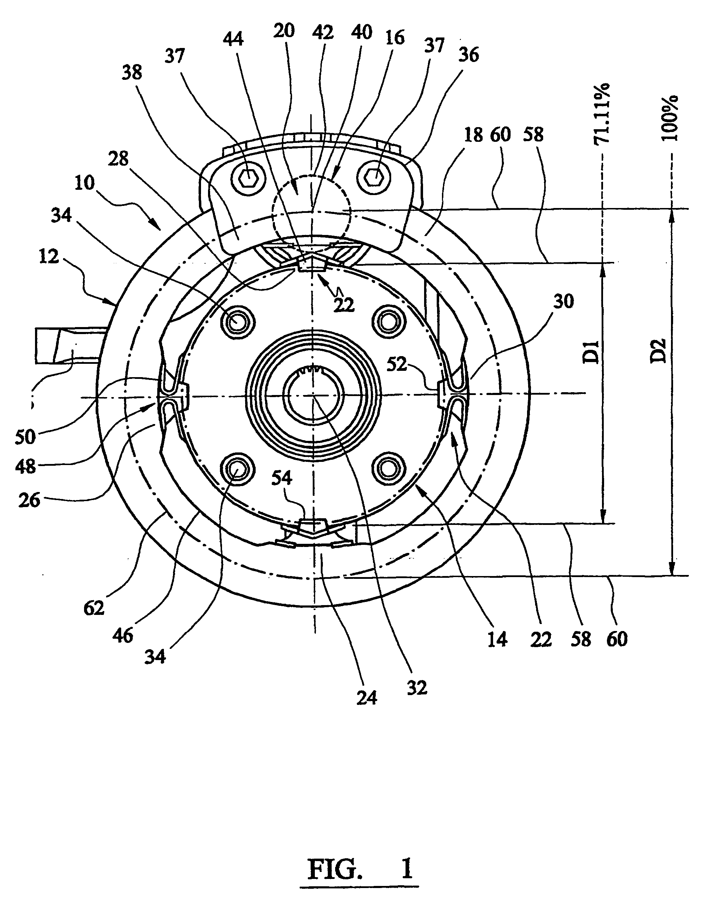

As shown in Fig 1, a disc brake 10 illustrating the method and apparatus of an embodiment of the invention as applied to a spot-type automotive disc brake for use in small to medium size automobiles comprises at least one brake disc 12. In this embodiment, twin brake discs 12 are provided for the purposes of front wheel braking.

A rotatable mounting 14 is provided for brake disc 12 to permit such rotation thereof and which is adapted to drive brake disc 12 and to have exerted thereon a braking effect by the brake disc when the brake is actuated.

At least two friction elements 16 adapted to frictionally engage braking surfaces 18 on opposite sides of brake disc 12 are provided in order to effect braking on actuation of actuation means 20 therefor. In this embodiment, friction elements 16 (to be more fully described below) are indicated by reference numerals 16 at the location of actuation means 20.

Brake disc 12 is axially slidable in use with respect to its rotatable mounting 14 by means of slidable drive means 22 under the action of friction elements 16 and actuation means 20 during braking.

Slidable drive means 22 is provided at circumferentially-spaced positions 24, 26, 28 and 30 around brake disc 12 and adapted to act between the brake disc and rotatable mounting 14 at those positions.

Having thus described briefly the main elements of disc brake 10 in terms of their inter-related operative functions, we now consider further their detailed construction.

Disc brake 10 is mounted on a wheel assembly having a rotation axis 32 for the ground-engagable wheel (not shown) which is a conventional front wheel tyre and rim and wheel disc assembly (not shown) adapted to be attached to wheel studs 34 provided on rotatable mounting 14 to receive conventional threaded wheel nuts (not shown) in the usual way. Rotation axis 32 is also the rotation axis of brake disc 12. Brake disc 12 is constructed from the usual metallic materials and provided with oppositely-facing braking surfaces 18 disposed as annuli for frictional engagement with friction elements 16 which comprise metallic backing plates having bonded thereto pads of friction material, the latter providing frictional engagement with braking surfaces 18. The detailed construction of the friction elements is not shown in Fig 1. The broken circle identified by reference numeral 16 represents merely a convenient means for indicating the general location of the friction elements, but is in fact the exact location of the sliding piston of actuation means 20, to be more fully described below.

Friction elements 16 are interleaved with the twin brake discs 12, one friction element between the discs, and one at each side. The friction element at the outboard side (which is the viewing side in Fig 1) is fixed to a caliper 36, namely to the end plate 38 thereof. The other two friction elements are mounted for sliding axial movement on caliper 36, the central friction element between the discs being double-sided in the sense of providing friction pads on both sides of its metallic backing plate for that purpose.

Caliper 36 comprises twin bolts 37 of a high-tensile material to provide tension strength with respect to the substantial tension loads set up during use by actuation means 20.

Turning now to the construction of actuation means 20, such is disposed to apply thrust lengthwise of an actuation axis 40 by means of a piston 42 mounted in a cylinder assembly (not shown) formed or constructed integrally with caliper 36. Piston 42 is shown by the same broken line circle as item 16 in Fig 1 designating the friction elements. Such has been explained above in terms of convenience of illustration (without multiplying the required differing views of brake 10).

Turning now to.slidable drive means 22 provided at positions 24, 26, 28 and 30, each of these comprises a generally inwardly-tapering (as viewed axially) drive element 44 provided at the inner periphery 46 of brake disc 12 (in each case being provided centrally of a slightly circumferentially-wider inward extension of inner periphery 46). In each case, the drive element 44 has received thereon resilient means 48 in the form of a wire spring 50 of generally diabolo format. The springs 50 (one for each drive element 44) act between hub or mounting 14 and brake discs 12 to exert a substantial inwardly/outwardly-directed force providing a disc anti-tilt function under the dynamic conditions of brake use. For further details of the construction and arrangement of wire springs 50, reference directed to our co-pending application GB0010810.0 (reference 30039/P54533GB).

Drive elements 44 are received in respective complementary guide channels 52, the inner end surface 54 of drive elements 44 being dimensioned and shaped to conform with the complementary confronting surface of its respective guide channel 52.

Also shown in Fig 1 is a steering arm 56 which is formed integrally (as a casting) with the wheel mounting on which rotatable mounting 14 is journalled.

We turn now to the features of disc brake 10 concerned with the dimensional range of 66% to 80% as discussed, earlier in this description.

Slidable drive means 22 comprises (as described above) slidable drive elements 44 and slidable complementary guide channels 52 which are assembled in interengaging cooperative engagement. Moreover, it is to be noted that the relatively limited radial depth of guide channels 52 enables drive elements 44 to make line contact with the tapering sides of the channels for drive transmission purposes (in the braking mode) at the locations identified in Fig 1 by the reference tangents 58, 60 for the positions 24, 28 of slidable drive means 22.

Thus, as shown in Fig 1, the dimension of the diameter corresponding to the distance from axis 32 of the contact lines between drive elements 44 and guide channels 52 is indicated at D1 as 136.5(25) millimetres.

Regarding the corresponding dimension of the radial distance from axis 32 of the centre of pressure (identified in this embodiment as the axis 40 of piston 42) of one of the friction elements 16 engaging one of the braking surfaces 18, such is indicated (in terms of a diameter) in Fig 1 by the dimension D2 which is shown as 192.0 millimetres. Thus, it will be seen that the ration of D1 to D2 is of 71.1% which thus lies within the range of 66% to 80% (as discussed above) within which the advantages discussed above are available.

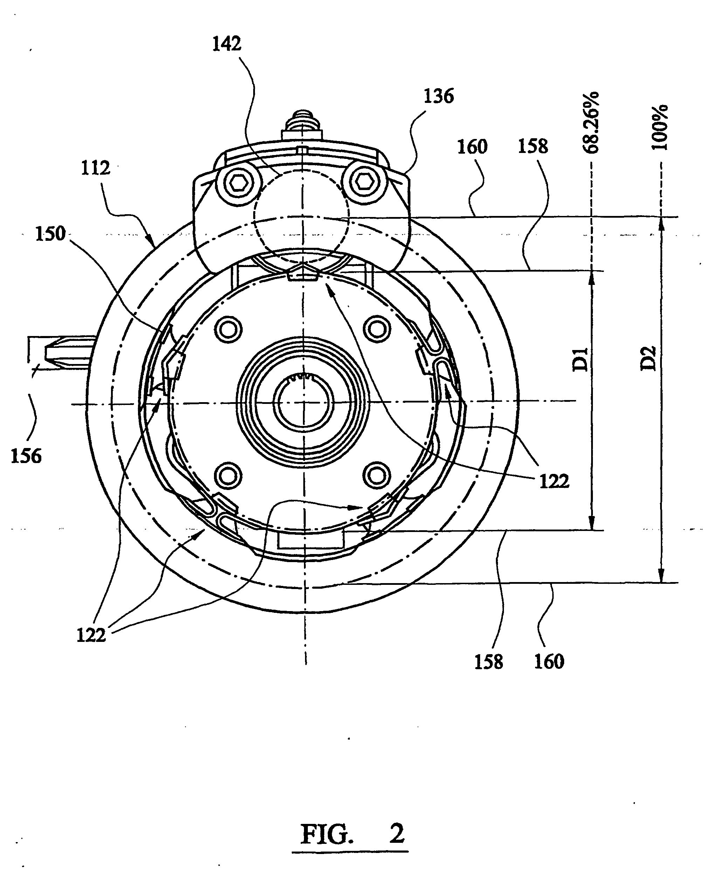

Turning now to the embodiment of Fig 2, in this figure the parts corresponding to those of Fig 1 are identified by corresponding reference numerals increased by 100. Thus, disc 12 becomes disc 112 etc.

In the embodiment of Fig 2, caliper 136 differs somewhat in design from caliper 36 and notably the slidable drive means 122 are disposed at differing (but equal) circumferential spacings such that there are five such slidable drive means instead of the four provided in the Fig 1 embodiment.

In this embodiment, dimensions D1 and D2 are 136.5(25) millimetres and 200.0 millimetres and thus the ratio is 68.2% which is likewise within the 66% to 80% range discussed above.

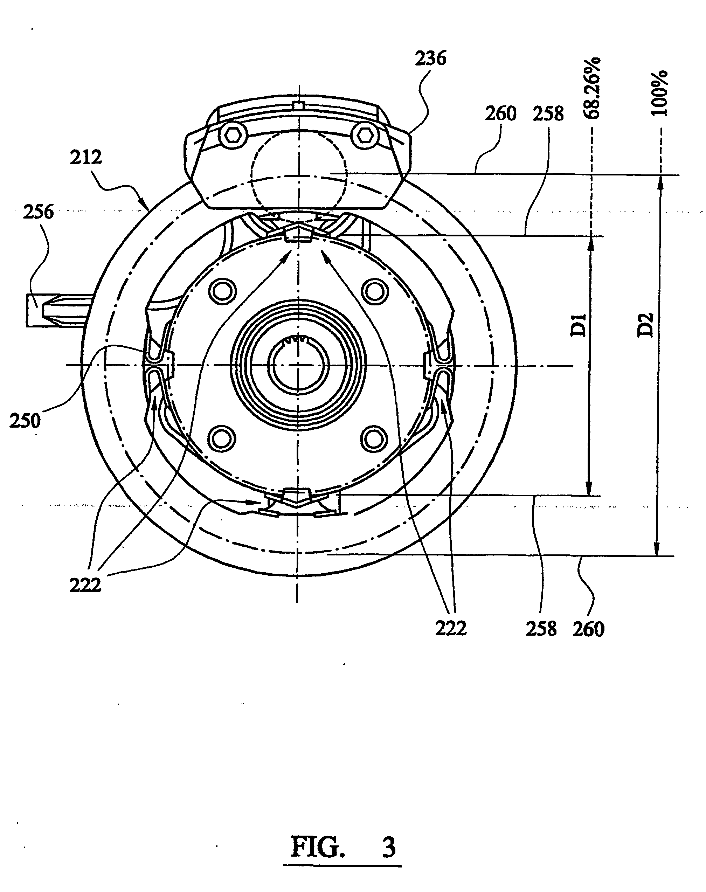

In the embodiment of Fig 3, the same approach to reference numerals has been adopted as in Fig 2, but in this case the serial numbers are increased by 200 from those.in Fig1. In this embodiment, the number of slidable drive means 222 reverts to four and the ratio of D1 to D2 is 68.2(6)%, the dimensions being the same as in Fig 2.

Turning to the embodiment of Fig 4, this also is provided with four slidable drive means 422, but in this case the ratio D1 to D2 is 162.2(25) to 208.0 millimetres and thus is 77.9(9)% which is in the region of the upper end of the range of diameters providing the advantages of the invention as revealed by our research and development. Thus, the discs 422 are relatively narrow in their radial width and thus in order to increase the available surface area for friction generation purposes, there are provided twin pistons 442 in caliper 436, with associated friction elements 416.

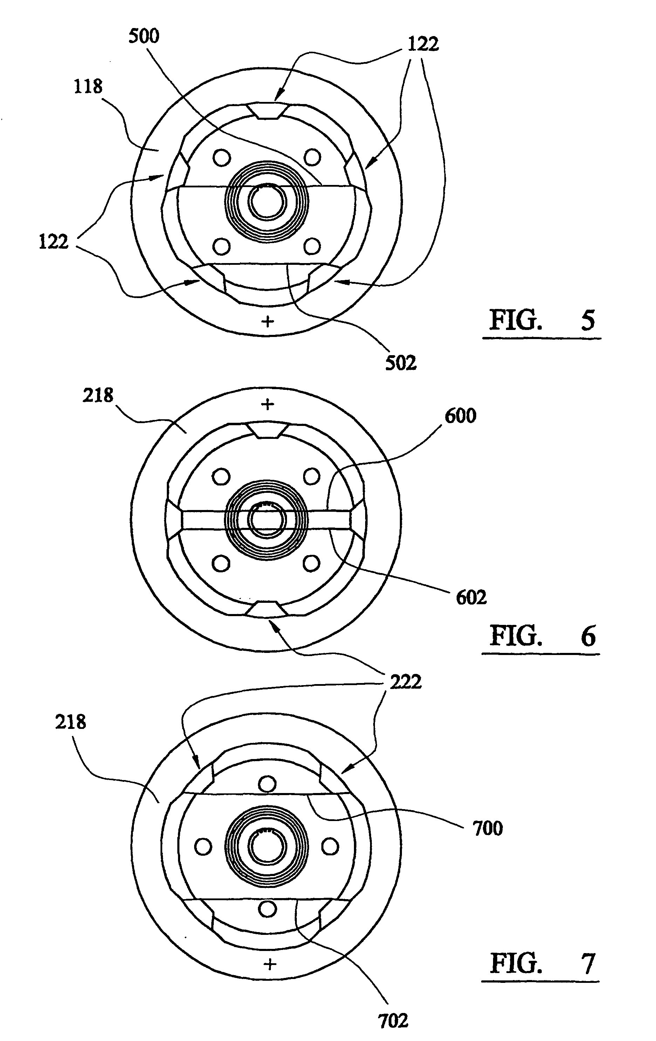

Turning now to the embodiments of Figs 5, 6 and 7 these correspond respectively to the five-slidable drive means 122 of Fig 2 (Fig 5) and the four slidable drive means of Figs 1, 3 and 4 (Figs 6 and 7).

In Fig 5, the structures corresponding to those of Fig 2 are identified by the same reference numerals and the significance of this embodiment lies principally in relation to the indicated pivot axis 500 and the contact axis 502 extending between the slidable drive means 122 as shown. Thus, pivot axis 500 identifies in relation to the slidable drive means 122 linked thereby, an axis of available pivotal movement which is restricted by the corresponding slidable drive means 122 linked by contact axis 502. It has been found that in this embodiment, measuring the extent of disc tilting or angular movement under braking load applied by the piston 142, there was angular movement of 0.9 degrees on the basis of a disc displacement lying between a minimum of 0.88 millimetres and a maximum of 2.29 millimetres.

Likewise, in the embodiments of Figs 6 and 7, which correspond in terms of the numbers of slidable drive means to (for example) Figs 1 and 3, the corresponding pivot and contact axis are identified at 600 and 602, and in this case slightly greater angular movement of 0.95 degrees is obtained with a corresponding disc movement of between 1.53 millimetres and 1.78 millimetres. This slightly increased range of available movement corresponds to the lower number of slidable drive means 222 and is obtained on the basis of the indicated disposition of contact and pivot axes 600, 602.

In Fig 7, the alternative disposition of the contact axes 700, 702 for the same structure as in Fig 7 (in which the axes interconnect successive slidable drive means 222 instead of opposed ones) produces an available angular movement of 0.88 degrees with a disc displacement range of between 0.88 millimetres and 2.19 millimetres.

The above numerical data has been found to be consistent with the technical advances identified above in relation to the numerical and other definitions of the embodiments of the invention. Suffice it to say that each of the embodiments described above in relation to Figs to 1 to 7 provides not only the above-discussed refinement in terms of brake operation but also, by virtue of the reduced loading in relation to the drive elements or teeth or keys 44, 144 etc, a reduced loading in use whereby the requirement for higher strength materials no longer applies to the extent that materials such as normal "grey cast iron" can be adopted.

## Claims

1. A spot-type disc brake (10), the disc brake (10) comprising:
a) at least one rotatable brake disc (12);
b) a rotatable mounting (14) for said brake disc (12) to permit such rotation and which is adapted to drive said brake disc (12) and to have exerted thereon a braking effect by said brake disc (12) when the brake is actuated;
c) at least two friction elements (16) adapted to frictionally engage braking surfaces (18) on opposite sides of said brake disc (12) to effect braking on actuation of actuation means therefor;
d) said brake disc (12) being axially slidable in use with respect to said mounting (14) therefore by means of slidable drive means (22) under the action of at least one of said friction elements (16) and said actuation means (20) therefor during braking;
e) said slidable drive (22) means comprising drive elements being provided at circumferentially spaced positions around said brake disc (12) and adapted to act between said brake disc (12) and said mounting (14) therefor at said positions;
**characterised by**
f) said slidable drive means (22) having a contact line between the drive elements (44) and mounting (14) at a radial distance (D1) from the axis (32) of rotation of the brake disc (12) which lies in the range of 66% to 80% of the radial distance (D2) from said axis (32) of rotation of the centre of pressure of one said friction elements (16) engaging one of said braking surfaces (18) of said disc (12).

2. A brake (10) according to claim 1 **characterised by** said slidable drive means (22) comprising 4, 5 or 7 drive elements (44) at equally circumferentially-spaced positions and causing same to transmit drive in use.

3. A brake (10) according to claim 1 **characterised by** said slidable drive means (22) comprising 5 drive elements (44) at circumferentially-spaced positions and causing same to transmit drive in use.

## Patentansprüche

1. Punkt-Scheibenbremse (10), wobei die Scheibenbremse (10) umfasst:
a) mindestens eine drehbare Bremsscheibe (12);
b) eine drehbare Anbringung (14) für die Bremsscheibe (12), um eine solche Drehung zu ermöglichen, wobei die Anbringung ausgebildet ist, die Bremsscheibe (12) anzutreiben, und auf sie durch die Bremsscheibe (12) eine Bremswirkung ausgeübt wird, wenn die Bremse betätigt wird;
c) mindestens zwei Reibungselemente (16), die ausgebildet sind, mit Bremsflächen (18) auf abgewandten Seiten der Bremsscheibe (12) in Reibungskontakt zu treten, um bei Betätigung von Betätigungsmitteln einen Bremsvorgang zu bewirken;
d) wobei die Bremsscheibe (12) bei Gebrauch bezüglich der Anbringung (14) mittels verschiebbarer Antriebsmittel (22) unter Einwirkung mindestens eines Reibungselements (16) und des Betätigungsmittels (20) während des Bremsvorgangs axial verschiebbar ist;
e) wobei die verschiebbaren Antriebsmittel (22) Antriebselemente umfassen, die an voneinander beabstandeten Positionen entlang dem Umfang der Bremsscheibe (12) vorgesehen und ausgebildet sind, zwischen der Bremsscheibe (12) und der Anbringung (14) an diesen Positionen zu wirken, **dadurch gekennzeichnet, dass**
f) die verschiebbaren Antriebsmittel (22) eine Kontaktlinie zwischen den Antriebselementen (44) und der Befestigung (14) mit einem radialen Abstand (D1) von der Drehachse (32) der Bremsscheibe (12) haben, der zwischen 66% und 80% des radialen Abstands (D2) von der Drehachse (32) des Druckmittelpunkts eines der Reibungselemente (16) liegt, das an eine der Bremsflächen (18) der Scheibe (12) anliegt.

2. Bremse (10) nach Anspruch 1, **dadurch gekennzeichnet, dass** die verschiebbaren Antriebsmittel (22) 4, 5 oder 7 Antriebselemente (44) an gleichmäßig voneinander beabstandeten Positionen entlang dem Umfang umfassen und bewirken, dass diese bei Gebrauch eine Antriebskraft übertragen.

3. Bremse (10) nach Anspruch 1, **dadurch gekennzeichnet, dass** die verschiebbaren Antriebsmittel (22) 5 Antriebselemente (44) an gleichmäßig voneinander beabstandeten Positionen entlang dem Umfang umfassen und bewirken, dass diese bei Gebrauch eine Antriebskraft übertragen.

## Revendications

1. Frein à disque du type à faible surface (10), ledit frein à disque (10) comprenant :
a) au moins un frein à disque rotatif (12) ;
b) une fixation rotative (14) pour ledit frein à disque (12) pour permettre ladite rotation et qui est adaptée pour entraîner ledit frein à disque (12) pour que s'y exerce un effet de freinage par ledit frein à disque (12) quand le frein est activé ;
c) au moins deux éléments de frottement (16) adaptés pour accoupler par frottement les surfaces de frottement (19) sur les côtés opposés dudit frein à disque (12) pour effectuer le freinage lors de l'activation du moyen d'activation ;
d) ledit frein à disque (12) pouvant coulisser axialement au cours de l'utilisation par rapport à ladite fixation (14) grâce à un moyen d'entraînement coulissant (22) sous l'action d'au moins l'un desdits éléments de frottement (16) et dudit élément d'activation (20) au cours du freinage ;
e) ledit moyen d'entraînement coulissant (22) comprenant des éléments d'entraînement placés à des positions espacées sur la circonférence autour dudit disque de frein (12) et adaptés pour agir entre ledit disque de freinage (12) et ladite fixation (14) dans lesdites positions ;
**caractérisé en ce que**
f) ledit moyen d'entraînement coulissant (22) a une ligne de contact entre les éléments d'entraînement (44) et de montage (14) à une distance radiale (D1) depuis l'axe de rotation (32) du disque de frein (12) qui repose dans une plage de 66 % à 80 % de la distance radiale (D2) à partir dudit axe de rotation (32) du centre de pression de l'un desdits éléments de frottement (16) qui s'accouple avec l'une desdites surfaces de freinage (18) dudit disque (12).

2. Frein (10) selon la revendication 1,
**caractérisé en ce que** ledit moyen d'entraînement coulissant (22) comprend 4, 5 ou 7 éléments d'entraînement (44) dans des positions espacées sur la circonférence et pousse ceux-ci à transmettre l'entraînement au cours de l'utilisation.

3. Frein (10) selon la revendication 1,
**caractérisé en ce que** ledit moyen d'entraînement coulissant (22) comprend 5 éléments d'entraînement (44) dans des positions espacées sur la circonférence et pousse ceux-ci à transmettre l'entraînement au cours de l'utilisation.
